# EUROPEAN PATENT SPECIFICATION

(11) **EP 1 835 041 B1**
(45) Date of publication and mention of the grant of the patent: **15.09.2010**
(21) Application number: 07250977.1
(22) Date of filing: 08.03.2007
(51) Int. Cl.: C22C 19/05

(54) **Nickel alloy welding wire**
Nickellegierungsschweißdraht
Fil pour soudure d'alliage à base de nickel

(30) Priority: 16.03.2006 US 377947
(43) Date of publication of application: 19.09.2007
(73) Proprietor: United Technologies Corporation, Hartford, CT 06101 (US)
(72) Inventor: Graillat, Clifford, Westbrook, CT 06498 (US); Minor, Michael, Arlintong, TX 76018 (US); Ivory, Steven, Manchester, CT 06040 (US)
(74) Representative: Leckey, David Herbert

(56) References cited:
- EP-A- 1 258 312
- WO-A2-02/50323
- US-A- 4 849 030
- US-A- 5 783 318

## Description

### BACKGROUND OF THE INVENTION

### (1) Field of the Invention

The present invention relates to a nickel alloy welding wire utilized for the weld repair of nickel-based superalloy components, particularly turbine blades and to a method for repairing components using the nickel alloy welding wire.

### (2) Prior Art

Nickel based superalloys have found use in a variety of high technology applications. Single crystal, directionally solidified and equiaxed nickel-based alloys that exhibit strength and oxidation resistance at high temperature are particularly useful in forming engine components. Since articles composed of nickel-based superalloys are expensive or difficult to replace, there is a need for methods of repairing such articles. One such repair method is illustrated in U.S. Patent No. 5,783,318.

Despite prior efforts in the area of repair of nickel-based superalloys, there remains a need for new methods of repairing nickel-based superalloy substrates. There is a corresponding need for a nickel based alloy that is suitable for coating or repair of substrates.

Nickel alloy welding wires are disclosed in US-A-5,783,318 and WO 02/50323.

### SUMMARY OF THE INVENTION

In accordance with the present invention, there is provided a nickel alloy welding wire as claimed in claim 1.

A method for repairing a crack in a workpiece, such as a turbine engine component is also provided. The method broadly comprises the steps of providing a workpiece having a crack, heating the workpiece to a temperature in the range of from about 1625 to 1675 degrees Fahrenheit (about 885ºC to about 913ºC) for a time in the range of from about 2.0 to 3.0 minutes, and repairing the crack by applying a welding wire having the aforesaid composition in accordance with the present invention and maintaining the temperature until the repair material of the welding wire flows into and fills the crack.

Other details of the nickel alloy welding wire of the present invention, as well as other advantages attendant thereto, are set forth in the following detailed description.

### DETAILED DESCRIPTION OF THE PREFERRED EMBODIMENT(S)

As noted above, the present invention is directed to a nickel alloy welding wire which may be used to repair cracks in turbine engine components formed from a nickel-based superalloy. In a first embodiment, the nickel welding wire is formed from a material having a composition comprising from 4.75 to 5.25 wt% chromium, from 5.5 to 5.8 wt% aluminum, from 5.6 to 6.2 wt% tungsten, from 8.0 to 8.3 wt% tantalum, from 1.7 to 2.1 wt% molybdenum, from 9.5 to 10.5 wt% cobalt, from 2.8 to 3.2 wt% rhenium, from 0.07 to 0.30 wt% carbon, from 0.02 to 0.04 wt% boron, from 0.08 to 0.12 wt% zirconium, from 0.08 to 0.12 wt% yttrium, from 1.0 to 1.5 wt% hafnium, up to 0.12 wt% manganese, up to 0.12 wt% silicon, up to 0.015 wt% phosphorous, up to 0.015 wt% sulfur, up to 0.20 wt% iron, up to 0.10 wt% copper and the balance nickel. .

The welding wire of the present invention may be formed by casting a material having one of the foregoing compositions into any suitable form including, but not limited to, a billet or a rod form. After casting has been completed, the cast material may be subjected to one or more heat treatments to increase its ductility. Thereafter, the material may be formed into a wire by one or more cold rolling and/or extrusion operations. These cold rolling and/or extrusion operations are preferably performed in a suitable protective atmosphere. The extrusion operation is preferably formed at a temperature of about 2000 degrees Fahrenheit (about 1093 °C). After being formed into a wire state, the welding wire may be subjected to a grind operation which gives the wire its final finish. Additionally, the welding wire may be subjected to a cleaning process for removing drawing compounds, oxides, dirt and oil. The cleaning process should not result in pitting or cause gas absorption by the wire or deposition of substances harmful to welding operations.

The welding wire is preferably in a temper that provides proper feeding of the wire into machine welding equipment. The welding wire may be provided with this temper in any suitable manner known in the art. For example, the welding wire may be processed as set forth in any of U.S. Patent Nos. 4,323,186; 4,777,710; and 6,586,060, which patents are incorporated by reference herein.

To effect a repair on a cracked turbine engine component, such as a cracked turbine blade airfoil tip, the crack may be cleaned first to remove any debris or unwanted material. Any suitable technique known in the art may be used to repair the crack. After the crack has been cleaned, the cracked turbine engine component may be heated to a temperature in the range of from about 1625 to about 1675 degrees Fahrenheit (about 1066 ºC to about 1093 ºC) via induction heating and held at that temperature for a time in the range of from about 2.0 to about 3.0 minutes. Thereafter, the crack may be welded using a welding wire having a composition in accordance with the present invention, while maintaining the temperature in the aforesaid range. This causes the material forming the welding wire to flow into the crack being repaired. The aforesaid crack repair operation may be performed in any suitable atmosphere known in the art. After the crack has been completely filled with the material forming the welding wire, the application of heat is halted and the repair material is allowed to solidify.

If desired, the repaired turbine engine component may then be subjected to a heat treatment for stress relief. This heat treatment may be carried out at a temperature in the range of from about 1950 to about 2000 degrees Fahrenheit (about 1066ºC to about 1093ºC) for a time period in the range of from about three to five minutes. The stress relief heat treatment may be carried out in any suitable atmosphere known in the art. Any excess repair material at the repair site may be removed using any suitable means known in the art.

The welding wire of the present invention features improved material characteristics over comparable currently used weld filler materials and may be used for high temperature applications. The welding wire may be used for crack repair as well as weld build up. The welding wire may be used to repair cracks in turbine engine components such as turbine blades, vanes, seals, BOAS, and combustor panels.

While the present invention has been described in the context of repairing cracks in turbine engine components, it should be recognized that the welding wire compositions of the present invention may be used to repair cracks in other types.of workpieces.

## Claims

1. A nickel alloy wire to be used in effecting repairs to nickel based superalloy components, said nickel based alloy being formed from a material consisting of from 4.75 to 5.25 wt% chromium, from about 5.5 to 5.8 wt% aluminum, from 5.6 to 6.2 wt% tungsten, from 8.0 to 8.3 wt% tantalum, from 1.7 to 2.1 wt% molybdenum, from 9.5 to 10.5 wt% cobalt, from 2.8 to 3.2 wt% rhenium, from 0.07 to 0.30 wt% carbon, from 0.02 to 0.04 wt% boron, from 0.08 to 0.12 wt% zirconium, from 0.08 to 0.12 wt% yttrium, from 1.0 to 1.5 wt% hafnium, up to 0.12 wt% manganese, up to 0.12 wt% silicon, up to 0.015 wt% phosphorous, up to 0.015 wt% sulfur, up to 0.20 wt% iron, up to 0.10 wt% copper and the balance nickel.

2. The nickel alloy wire of claim 1, wherein said wire has a temper that provides proper feeding of the wire into machine welding equipment.

3. A method for repairing a crack in a nickel based superalloy component comprising the steps of:
providing a workpiece having a crack;
heating said workpiece to a temperature in the range of from about 1625 to 1675 degrees Fahrenheit (about 885ºC to about 913ºC) for a time in the range of from about 2.0 to 3.0 minutes; and
repairing said crack by applying a welding wire formed from a nickel based alloy having a composition consisting of 4.75 to 5.25 wt% chromium, from 5.5 to 5.8 wt% aluminum, from 5.6 to 6.2 wt% tungsten, from 8.0 to 8.3 wt% tantalum, from 1.7 to 2.1 wt% molybdenum, from 9.5 to 10.5 wt% cobalt, from 2.8 to 3.2 wt% rhenium, from 0.07 to 0.30 wt% carbon, from 0.02 to 0.04 wt% boron, from 0.08 to 0.12 wt% zirconium, from 0.08 to 0.12 wt% yttrium, from 1.0 to 1.5 wt% hafnium, up to 0.12 wt% manganese, up to 0.12 wt% silicon, up to 0.015 wt% phosphorous, up to 0.015 wt% sulfur, up to 0.20 wt% iron, up to 0.10 wt% copper and the balance nickel to said crack and maintaining said temperature until said material flows into and fills said crack.

4. The method according to claim 3 wherein said heating step comprises heating said workpiece with an induction heater.

5. The method according to claim 3 or 4, further comprising subjecting said workpiece to a stress relief heat treatment.

6. The method according to claim 5, wherein said subjecting step comprises heating said workpiece to a temperature in the range of from 1950 to 2000 degrees Fahrenheit (1066ºC to 1093ºC) for a time period in the range of from about three to five minutes.

7. The method according to any of claims 3 to 6, wherein said workpiece providing step comprises providing a turbine engine component having a crack to be repaired.

## Patentansprüche

1. Nickellegierungsdraht, der beim Ausführen von Reparaturen an Komponenten aus Superlegierung auf Nickelbasis zu verwenden ist, wobei die Legierung auf Nickelbasis gebildet ist aus einem Material, das besteht aus von 4,75 bis 5,25 Gew.% Chrom, von etwa 5,5 bis 5,8 Gew.% Aluminium, von 5,6 bis 6,2 Gew.% Wolfram, von 8,0 bis 8,3 Gew.% Tantal, von 1,7 bis 2,1 Gew.% Molybdän, von 9,5 bis 10,5 Gew.% Kobalt, von 2,8 bis 3,2 Gew.% Rhenium, von 0,07 bis 0,30 Gew.% Kohlenstoff, von 0,02 bis 0,04 Gew.% Bor, von 0,08 bis 0,12 Gew.% Zirkonium, von 0,08 bis 0,12 Gew.% Yttrium, von 1,0 bis 1,5 Gew.% Hafnium, bis zu 0,12 Gew.% Mangan, bis zu 0,12 Gew.% Silizium, bis zu 0,015 Gew.% Phosphor, bis zu 0,015 Gew.% Schwefel, bis zu 0,20 Gew.% Eisen, bis zu 0,10 Gew.% Kupfer, und Rest Nickel.

2. Nickellegierungsdraht nach Anspruch 1, wobei der Draht einen Härtegrad hat, der für eine angemessene Einspeisung des Drahts in ein maschinelles Schweißgerät sorgt.

3. Verfahren zum Reparieren eines Risses in einer Komponente aus Superlegierung auf Nickelbasis, folgende Schritte aufweisend:
Bereitstellen eines Werkstücks mit einem Riss;
Erhitzen des Werkstücks auf eine Temperatur in dem Bereich von etwa 1625 bis 1675 °F (etwa 885 °C bis etwa 913 °C) für eine Zeit in dem Bereich von etwa 2,0 bis 3,0 Minuten; und
Reparieren des Risses durch Aufbringen eines Schweißdrahts, der gebildet ist aus einer Legierung auf Nickelbasis mit einer Zusammensetzung, die besteht aus 4,75 bis 5,25 Gew.% Chrom, von 5,5 bis 5,8 Gew.% Aluminium, von 5,6 bis 6,2 Gew.% Wolfram, von 8,0 bis 8,3 Gew.% Tantal, von 1,7 bis 2,1 Gew.% Molybdän, von 9,5 bis 10,5 Gew.% Kobalt, von 2,8 bis 3,2 Gew.% Rhenium, von 0,07 bis 0,30 Gew.% Kohlenstoff, von 0,02 bis 0,04 Gew.% Bor, von 0,08 bis 0,12 Gew.% Zirkonium, von 0,08 bis 0,12 Gew.% Yttrium, von 1,0 bis 1,5 Gew.% Hafnium, bis zu 0,12 Gew.% Mangan, bis zu 0,12 Gew.% Silizium, bis zu 0,015 Gew.% Phosphor, bis zu 0,015 Gew.% Schwefel, bis zu 0,20 Gew.% Eisen, bis zu 0,10 Gew.% Kupfer, und Rest Nickel, auf den Riss, und Halten der Temperatur bis das Material in den Riss fließt und ihn füllt.

4. Verfahren nach Anspruch 3, bei dem der Schritt des Erhitzens ein Erhitzen des Werkstücks mit einem Induktionsheizgerät umfasst.

5. Verfahren nach Anspruch 3 oder 4, außerdem aufweisend ein Unterziehen des Werkstücks einer Spannungsminderungs-Wärmebehandlung.

6. Verfahren nach Anspruch 5, bei dem der Schritt des Unterziehens ein Erhitzen des Werkstücks auf eine Temperatur in dem Bereich von 1950 bis 2000 °F (1066 °C bis 1093 °C) für eine Zeitdauer in dem Bereich von etwa drei bis fünf Minuten umfasst.

7. Verfahren nach einem der Ansprüche 3 bis 6, bei dem der Schritt des Bereitstellens des Werkstücks ein Bereitstellen einer Turbinenmaschinenkomponente mit einem zu reparierenden Riss umfasst.

## Revendications

1. Fil en alliage de nickel à utiliser pour effectuer des réparations dans des composants en superalliage à base de nickel, ledit alliage à base de nickel étant constitué d'un matériau comprenant de 4,75 % en poids à 5,25 % en poids de chrome, d'environ 5,5 % en poids à 5,8 % en poids d'aluminium, de 5,6 % en poids à 6,2 % en poids de tungstène, de 8,0 % en poids à 8,3 % en poids de tantale, de 1,7 % en poids à 2,1 % en poids de molybdène, de 9,5 % en poids à 10,5 % en poids de cobalt, de 2,8 % en poids à 3,2 % en poids de rhénium, de 0,07 % en poids à 0,30 % en poids de carbone, de 0,02 % en poids à 0,04 % en poids de bore, de 0,08 % en poids à 0,12 % en poids de zirconium, de 0,08 % en poids à 0,12 % en poids d'yttrium, de 1,0 % en poids à 1,5 % en poids de hafnium, jusqu'à 0,12 % en poids de manganèse, jusqu'à 0,12 % en poids de silicium, jusqu'à 0,015 % en poids de phosphore, jusqu'à 0,015 % en poids de soufre, jusqu'à 0,20 % en poids de fer, jusqu'à 0,10 % en poids de cuivre, et le reste étant du nickel.

2. Fil en alliage de nickel selon la revendication 1, dans lequel ledit fil présente une dureté qui assure une introduction correcte du fil dans l'équipement de soudage à la machine.

3. Procédé pour réparer une fissure dans un composant en superalliage à base de nickel, comprenant les étapes suivantes:
fournir une pièce présentant une fissure;
chauffer ladite pièce à une température comprise dans la gamme d'environ 1625°F à 1675°F (environ 885°C à environ 913°C) pendant une durée comprise dans la gamme d'environ 2,0 minutes à 3,0 minutes; et
réparer ladite fissure en appliquant un fil de soudage, formé à partir d'un alliage à base de nickel dont la composition est constituée de 4,75 % en poids à 5,25 % en poids de chrome, de 5,5 % en poids à 5,8 % en poids d'aluminium, de 5,6 % en poids à 6,2 % en poids de tungstène, de 8,0 % en poids à 8,3 % en poids de tantale, de 1,7 % en poids à 2,1 % en poids de molybdène, de 9,5 % en poids à 10,5 % en poids de cobalt, de 2,8 % en poids à 3,2 % en poids de rhénium, de 0,07 % en poids à 0,30 % en poids de carbone, de 0,02 % en poids à 0,04 % en poids de bore, de 0,08 % en poids à 0,12 % en poids de zirconium, de 0,08 % en poids à 0,12 % en poids d'yttrium, de 1,0 % en poids à 1,5 % en poids de hafnium, jusqu'à 0,12 % en poids de manganèse, jusqu'à 0,12 % en poids de silicium, jusqu'à 0,015 % en poids de phosphore, jusqu'à 0,015 % en poids de soufre, jusqu'à 0,20 % en poids de fer, jusqu'à 0,10 % en poids de cuivre, et le reste étant du nickel, sur ladite fissure, et maintenir ladite température jusqu'à ce ledit matériau s'écoule dans ladite fissure et remplisse celle-ci.

4. Procédé selon la revendication 3, dans lequel ladite étape de chauffage comprend le chauffage de ladite pièce à l'aide d'un four à induction.

5. Procédé selon la revendication 3 ou 4, comprenant en outre la soumission de ladite pièce à un traitement thermique de détente des contraintes.

6. Procédé selon la revendication 5, dans lequel ladite étape de soumission comprend le chauffage de ladite pièce à une température qui est comprise dans la gamme de 1950°F à 2000°F (1066°C à 1093°C) pendant une période de temps qui est comprise dans la gamme d'environ trois minutes à cinq minutes.

7. Procédé selon l'une quelconque des revendications 3 à 6, dans lequel ladite étape de fourniture d'une pièce comprend la fourniture d'un composant de moteur à turbine qui comporte une fissure à réparer.
